# FASCICULE DE BREVET EUROPEEN

(11) **EP 2 991 801 B1**
(45) Date de publication et mention de la délivrance du brevet: **08.02.2017**
(21) Numéro de dépôt: 14720132.1
(22) Date de dépôt: 29.04.2014
(51) Int. Cl.: B24B 13/00

(54) **PROCÉDÉ DE FAÇONNAGE D'UN COMPOSANT OPTIQUE POUR OBTENIR UNE SURFACE OPTIQUE ASPHÉRIQUE**
VERFAHREN ZUM FORMEN EINER OPTISCHEN KOMPONENTE ZWECKS HERSTELLUNG EINER ASPHÄRISCHEN OBERFLÄCHE
METHOD FOR SHAPING AN OPTICAL COMPONENT IN ORDER TO PRODUCE AN ASPHERICAL SURFACE

(30) Priorité: 29.04.2013 FR 1353903
(43) Date de publication de la demande: 09.03.2016
(73) Titulaire: Commissariat à l'Énergie Atomique et aux Énergies Alternatives, 75015 Paris (FR)
(72) Inventeur: LANTERNIER, Thomas, F-33610 Cestas (FR); BOUILLET, Stéphane, F-40410 Liposthey (FR)
(74) Mandataire: Brevalex
(86) Numéro de dépôt international: PCT/EP2014/058637
(87) Numéro de publication internationale: WO 2014/177525

(56) Documents cités:
- EP-A1- 2 144 093
- SPORER S F: "TMT: Stressed Mirror Polishing fixture study", PROCEEDINGS OF SPIE - INTERNATIONAL SOCIETY FOR OPTICAL ENGINEERING, S P I E - INTERNATIONAL SOCIETY FOR OPTICAL ENGINEERING, US, vol. 6267, 14 juin 2006 (2006-06-14), pages 62672R-1, XP008102616, ISSN: 0277-786X, DOI: 10.1117/12.693114 [extrait le 2006-06-26]
- JAY DANIEL ET AL: "Tinsley progress on stress mirror polishing (SMP) for the Thirty Meter Telescope (TMT) primary mirror segments II", PROCEEDINGS OF SPIE, vol. 7733, 16 juillet 2010 (2010-07-16), pages 773328-773328-9, XP055095909, ISSN: 0277-786X, DOI: 10.1117/12.857931 cité dans la demande
- JACOB LUBLINER ET AL: "Stressed mirror polishing 1: A technique for producing nonaxisymmetric mirrors", APPLIED OPTICS, vol. 19, no. 14, 15 juillet 1980 (1980-07-15), page 2332, XP055095911, ISSN: 0003-6935, DOI: 10.1364/AO.19.002332 cité dans la demande

## Description

### DOMAINE TECHNIQUE

La présente invention concerne le domaine des procédés de façonnage d'un composant optique pour qu'il présente une surface optique asphérique.

### ÉTAT DE LA TECHNIQUE ANTÉRIEURE

On connaît dans l'art antérieur différentes techniques pour réaliser un composant optique asphérique, un tel composant optique pouvant être de révolution, c'est-à-dire présenter une symétrie axiale. On peut parler de forme libre pour désigner une forme asphérique de non-révolution.

Les composants optiques asphériques sont classiquement obtenus par moulage (notamment dans le cas des pare-brise ou de certaines optiques d'appareils photographiques) ou en effectuant des retouches locales sur des pièces sphériques.

Un inconvénient de ces procédés est qu'ils ne sont pas adaptés à l'obtention de composants optiques de grandes dimensions. En outre, les techniques de retouches locales génèrent des défauts à des fréquences spatiales correspondant à la taille de l'outil de retouche. On peut limiter ces défauts en multipliant des cycles de retouche locale et de lissage (polissage avec un grand outil), mais le procédé devient alors particulièrement long.

Pour l'obtention de composants optiques de grandes dimensions, il est également connu d'utiliser une technique dite de polissage sous contraintes (*stress polishing*)*.* Un exemple de cette technique est décrit dans l'article de J. Daniel et al., « Tinsley progress on stress mirror polishing (SMP) for the Thirty Meter Telescope (TMT) primary mirror segments II », Proc. SPIE, vol. 7733, pp. 1-9, 2010. Dans cet article, les auteurs décrivent l'application de contraintes mécaniques contrôlées sur un miroir. Lesdites contraintes mécaniques sont maintenues, pendant qu'une surface optique du miroir est polie selon une forme plane ou sphérique. Lorsque les contraintes mécaniques sont relâchées, le miroir se déforme élastiquement de sorte que sa surface optique prenne une forme asphérique. Dans cette technique, on utilise l'élasticité instantanée du matériau que l'on veut polir.

Le lien entre des contraintes mécaniques appliquées à un composant optique et une déformation mécanique dudit composant a été étudié par J. Lubliner et al., dans un article intitulé "Stress mirror polishing. 1: A technique for producing nonaxisymmetric mirrors", Applied Optics, vol. 19, n° 14, pp. 2332-2340, 1980.

Un inconvénient du polissage sous contraintes est qu'il nécessite un support spécifique onéreux, permettant en même temps de maintenir les contraintes mécaniques sur le composant optique et de polir sa surface.

Un objectif de la présente invention est de proposer un procédé de façonnage d'un composant optique pour obtenir une surface optique asphérique, qui ne présente pas au moins l'un des inconvénients de l'art antérieur.

En particulier, un but de la présente invention est de proposer un procédé de façonnage d'un composant optique pour obtenir une surface optique asphérique, qui soit adapté à des surfaces optiques de grandes dimensions.

Un autre but de la présente invention est de proposer un procédé de façonnage rapide permettant d'obtenir une surface asphérique.

Un autre but de la présente invention est de proposer un procédé de façonnage peu onéreux, permettant d'obtenir une surface asphérique.

### EXPOSÉ DE L'INVENTION

La présente invention est définie par un procédé de façonnage d'un composant optique présentant une propriété d'élasticité retardée, le procédé comprenant les étapes suivantes :
- chauffage et application de contraintes mécaniques au composant optique, de façon à déformer de manière contrôlée une surface dudit composant optique dite surface optique utile, le chauffage portant la température du composant optique d'une température dite initiale à une température dite de travail inférieure à sa température de transition vitreuse, le chauffage et l'application de contraintes mécaniques étant mis en oeuvre en simultané ;
- arrêt du chauffage et relâchement des contraintes mécaniques;
- polissage de la surface optique utile, pour lui donner une forme sphérique ou planaire, ladite surface optique utile étant destinée à former une surface optique asphérique; puis
- relaxation de la déformation élastique retardée du composant optique. En particulier, le procédé selon l'invention comprend les étapes suivantes :
- pendant l'application de contraintes mécaniques, chauffage du composant optique, le chauffage portant la température du composant optique d'une température dite initiale à une température dite de travail inférieure à sa température de transition vitreuse ; et
- avant le polissage, arrêt du chauffage et relâchement des contraintes mécaniques.

Ainsi, on chauffe le composant optique pendant l'application de contraintes mécaniques à celui-ci.

L'arrêt du chauffage consiste en particulier à ramener le composant optique à sa température initiale.

De préférence, l'étape de relaxation de l'élasticité retardée du composant optique est mise en oeuvre par un chauffage du composant optique, ledit composant optique étant disposé de façon à ce que son axe optique soit orthogonal à l'axe vertical.

L'étape de chauffage et application de contraintes mécaniques peut être mise en oeuvre en positionnant le composant optique dans un four, en appui sur au moins un support d'appui, et en plaçant des masses sur une surface du composant optique du côté opposé au support d'appui.

Le composant optique est avantageusement délimité par deux surfaces optiques, un rapport entre une plus grande largeur d'une des surfaces optiques et une plus grande distance entre les deux surfaces optiques étant supérieur à cinq.

Le composant optique peut être un verre ou une céramique.

De préférence, le composant optique est un verre de type borosilicate.

### BRÈVE DESCRIPTION DES DESSINS

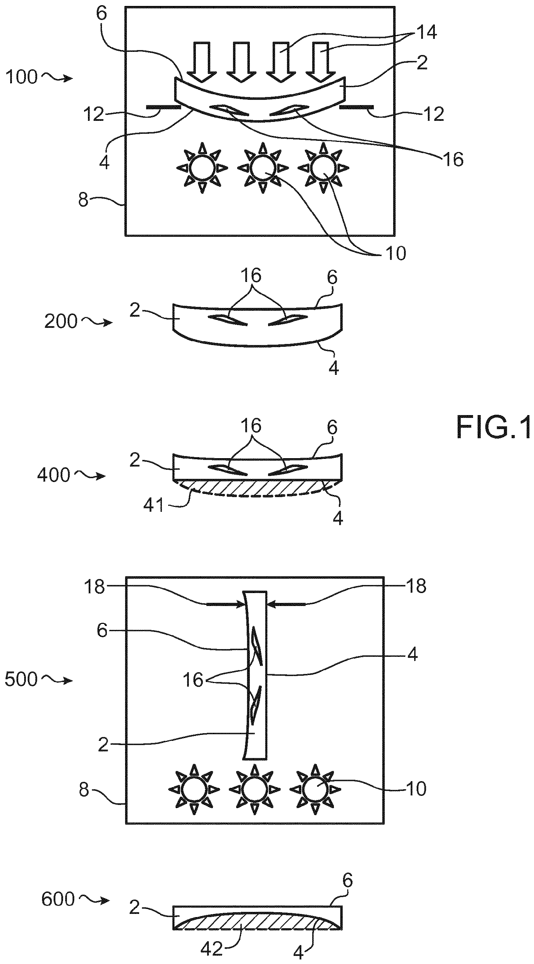

La présente invention sera mieux comprise à la lecture de la description d'un exemple de réalisation donné à titre purement indicatif et nullement limitatif, en faisant référence à la figure 1.

### EXPOSÉ DÉTAILLÉ DE MODES DE RÉALISATION PARTICULIERS

On va maintenant décrire, en référence à la figure 1 et de manière schématique, un exemple de mise en oeuvre du procédé selon l'invention.

Le procédé comprend une première étape, 100, de chauffage et d'application de contraintes mécaniques à un composant optique 2.

Les contraintes mécaniques 14 sont appliquées de manière contrôlée. On obtient donc une déformation mécanique prédéterminée du composant 2. Le lien entre les contraintes mécaniques appliquées à un composant à une température donnée, et sa déformation, peut être déterminé à l'aide d'un logiciel de calcul par éléments finis. On pourra également procéder par une méthode de calculs analytiques telle que décrite dans l'article de J. Lubliner et *al.* cité en introduction.

Les contraintes mécaniques 14 peuvent être appliquées en disposant le composant 2 à l'horizontale sur des supports 12 formant des points d'appui, et en disposant des masses sur le composant 2, à des emplacements prédéterminés. Disposer le composant 2 à l'horizontale équivaut à aligner son axe optique avec l'axe vertical. On pourra également envisager toute autre méthode d'application de contraintes mécaniques, notamment par application de forces radiales sur les bords du composant optique, ces bords entourant une surface optique que l'on souhaite façonner pour qu'elle soit asphérique.

Le chauffage consiste à porter le composant optique 2 d'une température dite initiale à une température dite de travail. La température de travail est supérieure à la température initiale. Typiquement, on considèrera que la température de travail doit rester inférieure à la température de transition vitreuse du composant 2. Dans le cas d'un composant en verre, la température de transition vitreuse du composant optique correspond sensiblement au milieu de l'intervalle de température dans lequel ledit composant devient progressivement plus visqueux et passe de l'état liquide à l'état solide. En pratique, le composant 2 est amené dans un four 8, à proximité de sources de chaleur 10. La température initiale correspond à la température ambiante, de l'ordre de 20°C. La température de travail peut être de l'ordre de plusieurs centaines de degrés Celsius, par exemple comprise entre 200°C et 500°C. On peut parler de « recuit » pour désigner le chauffage du composant 2.

La combinaison du chauffage et de l'application de contraintes mécaniques en simultané permet de déformer le composant 2 plus facilement et selon une plus grande amplitude.

Le procédé selon l'invention comprend ensuite une seconde étape, 200, d'arrêt du chauffage et de relâchement des contraintes mécaniques.

L'arrêt du chauffage consiste à ramener le composant 2 à sa température initiale. En pratique, on extrait le composant 2 hors du four 8.

Le composant 2 est tel que, lorsqu'il est soumis à une contrainte mécanique, il se déforme.

Lorsque la contrainte mécanique est relâchée, une grande partie de la déformation disparaît immédiatement. On parle de relaxation de l'élasticité instantanée du composant optique 2.

Le reste de la déformation ne disparaît pas immédiatement.

En pratique, on constate que le composant optique 2 ne retrouve pas immédiatement sa forme initiale mais garde une fraction de la déformation qui lui a été imposée pendant un certain temps par les contraintes qui lui étaient appliquées.

Cette fraction résiduelle de déformation est due à des contraintes internes 16 qui continuent d'exister dans le composant 2 même après relâchement des contraintes mécaniques, lesdites contraintes mécaniques formant des contraintes externes.

Au bout d'un certain temps, les contraintes internes 16 disparaîtront. Le phénomène est donc bien « élastique », mais à retardement. On dit que le composant 2 présente une propriété d'élasticité retardée. On peut également parler d'effet mémoire. Le composant reviendra alors à sa forme initiale, à moins bien sûr qu'il ait été usiné entre-temps. On peut parler de relâchement ou, de manière équivalente, de relaxation de la déformation élastique retardée du composant 2. Cette relaxation de la déformation élastique retardée du composant 2 est caractérisée par une constante de temps.

Le chauffage, en même temps que l'application des contraintes mécaniques, permet d'augmenter cette constante de temps. En jouant sur la température de chauffage, ainsi que sur la durée du chauffage et de l'application des contraintes mécaniques, on peut donc ajuster la valeur de cette constante de temps, et ainsi la durée pendant laquelle le composant présente encore une fraction résiduelle de la déformation appliquée initialement.

On a par exemple obtenu une élasticité retardée avec une constante de temps d'environ un an, pour un composant 2 en verre de type borosilicate (du verre BK7 en particulier) chauffé dans un four à 200°C pendant deux heures. Une augmentation de la durée et de la température de chauffage permet d'augmenter cette constante de temps.

On a pu montrer que la fraction de déformation subsistant après arrêt du chauffage et relâchement des contraintes mécaniques, correspond à une fraction fixe de la déformation appliquée au composant à l'étape 100, pour un matériau donné ayant été chauffé à une température donnée pendant cette même étape. Cette fraction dépend de la température en question et du type de matériau mais ne dépend pas en revanche de l'épaisseur du composant 2, ni des dimensions de ses surfaces optiques, ni de la déformation appliquée. Par exemple, on a montré que cette fraction était égale à 5,3%, pour du verre BK7 chauffé à 200°C.

Ainsi, on connaît :
- le lien entre les contraintes mécaniques appliquées et la déformation du composant 2, et
- le lien entre la déformation du composant 2 et la fraction de déformation subsistant après arrêt du chauffage et relâchement des contraintes mécaniques.

On peut ainsi retrouver le lien entre les contraintes mécaniques appliquées au composant 2 et la fraction de déformation subsistant après arrêt du chauffage et relâchement des contraintes mécaniques. *In fine,* on obtient un composant optique 2 présentant une surface 4 asphérique, définie par un certain écart relativement à une forme plane ou sphérique.

Rappelons que de nombreux verres, tels que les verres de type borosilicate, ainsi que de nombreuses céramiques, présentent une élasticité retardée. Le composant optique 2 est par exemple en verre tel que le verre Schott N-BK7, ou en céramique.

A l'issue de l'étape 200 d'arrêt du chauffage et de relâchement des contraintes mécaniques, la surface optique 4 du composant 2 présente un certain écart relativement à une forme plane ou sphérique dite forme de référence. Dans la suite, cet écart sera appelé écart positif 41. On peut définir cet écart comme étant, pour chaque point de la forme de référence, la distance entre ce point et le projeté orthogonal de ce point sur la surface optique 4.

Pour des raisons de lisibilité de la figure 1, on a amplifié sur la figure 1 la déformation de la surface 4 à l'issue de l'étape 200.

Le procédé selon l'invention comprend ensuite une étape 400 de polissage de la surface optique 4, selon ladite forme de référence (plane ou sphérique). La surface optique 4 est la surface destinée à former une surface optique asphérique. On peut parler de surface optique utile pour désigner la surface optique 4. Sur la figure 1, la forme de référence est plane.

Le procédé selon l'invention comprend ensuite une étape 500 de relaxation de l'élasticité retardée du composant optique 2.

Cette étape 500 est par exemple mise en oeuvre à l'aide d'un chauffage vertical du composant optique 2. On peut parler de deuxième recuit. Le composant optique 2 est par exemple placé de nouveau dans le four 8. Le composant optique 2 placé « à la verticale », c'est-à-dire aligné de façon à ce que son axe optique soit orthogonal à l'axe vertical. L'axe vertical est défini comme l'axe parallèle à la direction de la gravité. L'axe optique du composant optique est par exemple son axe de symétrie, si les surfaces optiques présentent une symétrie axiale. Afin de maintenir le composant optique 2 aligné selon l'axe vertical, on peut par exemple utiliser des montants 18 disposés de part et d'autre du composant optique 2. Dans le cas d'un composant 2 de forme cylindrique, on peut aussi utiliser un barillet. Et, si le composant 2 est prismatique, notamment parallélépipédique, on peut même, dans certains cas, le poser simplement sur la tranche. Typiquement, la durée et la température de ce chauffage vertical sont égales à la durée et la température du chauffage mis en oeuvre à l'étape 100.

L'étape 500 de relaxation de l'élasticité retardée déforme à nouveau la surface optique 4.

A l'issue de cette étape, la surface optique 4 présente donc un écart 42 relativement à ladite forme de référence (plane ou sphérique), cet écart étant l'inverse de l'écart positif 41 précédemment obtenu. Ce nouvel écart est dit négatif. En d'autres termes, la somme de l'écart positif 41 et de l'écart négatif 42 est nulle.

L'écart de forme souhaité par rapport à une forme de référence plane ou sphérique est donc obtenu en générant l'inverse de l'écart souhaité. On peut également parler du négatif de l'écart souhaité. Il s'agit donc de générer des bosses là où l'on souhaite avoir des creux et inversement.

On a également représenté à la figure 1 une étape 600 d'extraction du composant optique 2 hors du four, après relaxation de son élasticité retardée.

Il n'est pas nécessaire que la déformation élastique retardée présente une constante de temps particulièrement longue. Il suffit simplement que cette constante de temps soit suffisamment grande devant la durée du polissage 400 de la surface optique 4.

Selon une variante avantageuse, ladite constante de temps est courte, par exemple de l'ordre de quelques semaines. L'étape 500 de relaxation de l'élasticité retardée du composant optique 2 peut alors ne nécessiter aucune manipulation particulière, puisqu'il suffira simplement d'attendre un certain temps que cette élasticité retardée se relaxe « naturellement », c'est-à-dire sans qu'un deuxième chauffage ne soit nécessaire pour accélérer ce processus.

La forme (plane ou sphérique), selon laquelle on polit la surface optique 4, est choisie de façon à minimiser un écart avec la forme de la surface optique asphérique désirée au final.

On voit donc que la présente invention exploite astucieusement les propriétés d'élasticité retardée du composant optique 2, alors que ce phénomène était jusqu'à ce jour considéré comme gênant, notamment lors d'un polissage sous contraintes. Alors que l'homme du métier était incité à minimiser cet effet d'élasticité retardée, la présente invention se propose au contraire de mettre à profit cet effet en chauffant le composant 2 pendant l'application de contraintes mécaniques.

Le procédé selon l'invention est adapté au façonnage de tous types de surfaces optiques, même des surfaces optiques de grandes dimensions.

Le procédé selon l'invention permet de s'affranchir des inconvénients associés aux retouches locales.

Le polissage n'est pas mis en oeuvre simultanément à l'application des contraintes mécaniques. Ainsi, les exigences liées au matériel à utiliser pour mettre en oeuvre le procédé sont moindres. On peut utiliser des moyens de polissage standards. Le procédé selon l'invention est donc peu onéreux à mettre en oeuvre.

Après la relaxation de la déformation élastique retardée du composant optique, on pourra prévoir une étape de finition à l'aide d'un outil de polissage local. Néanmoins, même en considérant une telle étape de finition, l'invention permet de réduire considérablement un nombre de cycles de polissage en comparaison avec des procédés selon l'art antérieur multipliant des cycles de retouche locale et de lissage. Le procédé selon l'invention est donc un procédé de façonnage rapide permettant d'obtenir une surface asphérique.

Une application particulièrement avantageuse de l'invention concerne le façonnage de composants optiques minces. Un composant optique délimité par deux surfaces optiques est dit mince lorsqu'un rapport entre une plus grande largeur d'une des surfaces optiques, et une plus grande distance entre les deux surfaces optiques, est supérieur à cinq. La largeur d'une surface optique correspond à son diamètre, dans le cas d'une surface de forme circulaire. Une distance entre les deux surfaces optiques peut être mesurée selon un axe parallèle à l'axe optique du composant optique. Une largeur d'une surface optique peut être mesurée dans un plan orthogonal à l'axe optique du composant optique.

La présente invention trouve notamment à s'appliquer dans la réalisation de miroirs asphériques de grandes dimensions, destinés à la recherche en astrophysique ou à la focalisation de lasers de puissance, dans la réalisation de miroirs cylindriques, destinés à réfléchir un rayonnement synchrotron, ou encore dans la réalisation de concentrateurs solaires.

Elle peut également être mise en oeuvre pour compenser des défauts d'un composant, conduisant, en l'absence de compensation, à des aberrations optiques telles qu'astigmatisme, trefoil et coma. On peut également façonner le composant optique 2 de façon à ce qu'il compense des aberrations d'un système optique en amont ou en aval d'une chaîne optique.

L'invention n'est pas limitée aux exemples décrits, et l'on pourra envisager de nombreuses variantes, par exemples d'autres matériaux pour le composant optique, d'autres durées et températures de chauffage, d'autres moyens d'applications de contraintes mécaniques pendant le chauffage, etc., sans sortir du cadre de la présente invention.

## Revendications

1. Procédé de façonnage d'un composant optique (2) présentant une propriété d'élasticité retardée, **caractérisé en ce qu'**il comprend les étapes suivantes :
- chauffage et application de contraintes mécaniques au composant optique (100), de façon à déformer de manière contrôlée une surface dudit composant optique dite surface optique utile (4), le chauffage portant la température du composant optique d'une température dite initiale à une température dite de travail inférieure à sa température de transition vitreuse, le chauffage et l'application de contraintes mécaniques étant mis en oeuvre en simultané ;
- arrêt du chauffage et relâchement des contraintes mécaniques (200) ;
- polissage (400) de la surface optique utile (4), pour lui donner une forme sphérique ou planaire, ladite surface optique utile (4) étant destinée à former une surface optique asphérique ; puis
- relaxation (500) de la déformation élastique retardée du composant optique (2).

2. Procédé selon la revendication 1, **caractérisé en ce que** l'étape de relaxation (500) de l'élasticité retardée du composant optique (2) est mise en oeuvre par un chauffage du composant optique (2), ledit composant optique (2) étant disposé de façon à ce que son axe optique soit orthogonal à l'axe vertical.

3. Procédé selon la revendication 1 ou 2, **caractérisé en ce que** l'étape de chauffage et application de contraintes mécaniques (200) est mise en oeuvre en positionnant le composant optique (2) dans un four (8), en appui sur au moins un support d'appui (12), et en plaçant des masses sur une surface du composant optique du côté opposé au support d'appui (12).

4. Procédé selon l'une quelconque des revendications 1 à 3, **caractérisé en ce que** le composant optique (2) est délimité par deux surfaces optiques (4, 6), un rapport entre une plus grande largeur d'une des surfaces optiques et une plus grande distance entre les deux surfaces optiques étant supérieur à cinq.

5. Procédé selon l'une quelconque des revendications 1 à 4, **caractérisé en ce que** le composant optique (2) est un verre ou une céramique.

6. Procédé selon la revendication 5, **caractérisé en ce que** le composant optique (2) est un verre de type borosilicate.

## Patentansprüche

1. Verfahren zum Formen einer optischen Komponente (2), die eine Viskoelastizitäts-Eigenschaft aufweist,
**dadurch gekennzeichnet, dass** es die folgenden Schritte umfasst :
- Erwärmen und Anwenden von mechanischen Beanspruchungen auf die optische Komponente (100), um auf kontrollierte Weise eine optische Fläche von Interesse (4) genannte Fläche der Komponente zu verformen, wobei die Erwärmung die Temperatur der optischen Komponente von einer Initialtemperatur genannten Temperatur auf eine Arbeitstemperatur genannte Temperatur bringt, die niedriger ist als ihre Glasübergangstemperatur, wobei die Erwärmung und die Anwendung von mechanischen Beanspruchungen simultan eingesetzt werden ;
- Beenden der Erwärmung und Nachlassen der mechanischen Beanspruchungen (200) ;
- Polieren (400) der optischen Fläche von Interesse (4), um ihr eine planare oder sphärische Form zu geben, wobei die optische Fläche von Interesse (4) dazu bestimmt ist, eine asphärische optische Fläche zu bilden ; dann
- Relaxieren (500) der Viskoelastizitäts-Deformierung der optischen Komponente (2).

2. Verfahren nach Anspruch 1, **dadurch gekennzeichnet, dass** der Schritt (500) zur Viskoelastizitäts-Relaxierung der optischen Komponente (2) durch eine Erwärmung der optischen Komponente (2) realisiert wird, wobei die optische Komponente (2) so angeordnet wird, dass ihre optische Achse orthogonal zur Vertikalachse ist.

3. Verfahren nach Anspruch 1 oder 2, **dadurch gekennzeichnet, dass** der Schritt (200) zur Erwärmung und Anwendung von mechanischen Beanspruchungen ausgeführt wird, indem die optische Komponente (2) in einem Ofen (8) positioniert wird, abgestützt auf wenigstens einer Tragstütze (12), und indem Massen auf einer der Tragstütze (12) entgegengesetzten Seite der optischen Komponente platziert werden.

4. Verfahren nach einem der Ansprüche 1 bis 3, **dadurch gekennzeichnet, dass** die optische Komponente (2) durch zwei optische Flächen (4, 6) begrenzt ist, wobei ein Verhältnis zwischen einer größten Breite einer der optischen Flächen und einer größten Distanz zwischen den beiden optischen Flächen größer als fünf ist.

5. Verfahren nach einem der Ansprüche 1 bis 4, **dadurch gekennzeichnet, dass** die optische Komponente (2) ein Glas oder eine Keramik ist.

6. Verfahren nach Anspruch 5, **dadurch gekennzeichnet, dass** die optische Komponente (2) ein Glas des Typs Borosilikat ist.

## Claims

1. A method for shaping an optical component (2) having a viscous elasticity property, **characterized in that** it comprises the following steps of:
- heating and applying mechanical stresses to the optical component (100), so as to controllably deform a surface of said optical component called a useful optical surface (4), the heating bringing the temperature of the optical component from a so-called initial temperature to a so-called working temperature lower than its glass transition temperature, heating and applying mechanical stresses being simultaneous implemented;
- stopping the heating and relieving the mechanical stresses (200);
- polishing (400) the useful optical surface (4), to give it a spherical or planar shape, said useful optical surface (4) being intended to form an aspherical optical surface; then
- relaxing (500) the viscous elastic deformation of the optical component (2).

2. The method according to claim 1, **characterized in that** the step of relaxing (500) the viscous elasticity of the optical component (2) is implemented by heating the optical component (2), said optical component (2) being disposed so that its optical axis is orthogonal to the vertical axis.

3. The method according to claim 1 or 2, **characterized in that** the step of heating and applying mechanical stresses (200) is implemented by positioning the optical component (2) in an oven (8), bearing against at least one bearing support (12), and placing masses onto a surface of the optical component on the opposite side to the bearing support (12).

4. The method according to any of claims 1 to 3, **characterized in that** the optical component (2) is delimited by two optical surfaces (4, 6), a ratio between a greatest width of one of the optical surfaces and a greatest distance between both optical surfaces being higher than five.

5. The method according to any of claims 1 to 4, **characterized in that** the optical component (2) is a glass or ceramics.

6. The method according to claim 5, **characterized in that** the optical component (2) is a borosilicate type glass.
